# EUROPÄISCHE PATENTSCHRIFT

(11) **EP 2 597 819 B1**
(45) Veröffentlichungstag und Bekanntmachung des Hinweises auf die Patenterteilung: **19.12.2018**
(21) Anmeldenummer: 12189522.1
(22) Anmeldetag: 23.10.2012
(51) Int. Cl.: H04L 12/24, H04L 29/06

(54) **Verfahren zum Bedienen eines Feldgerätes**
Method for controlling a field device
Procédé de commande d'un appareil de terrain

(30) Priorität: 18.11.2011 DE 102011086630
(43) Veröffentlichungstag der Anmeldung: 29.05.2013
(73) Patentinhaber: ENDRESS + HAUSER WETZER GmbH + Co. KG, 87484 Nesselwang (DE)
(72) Erfinder: Damith, Stephan, 87484 Nesselwang (DE); Syber, Ulrich, 87645 Schwangau (DE); Wotsch, Robert, 87484 Nesselwang (DE); Schneid, Christian, 87484 Nesselwang (DE); Briechle, Bernd, 87471 Durach (DE)
(74) Vertreter: Andres, Angelika Maria

(56) Entgegenhaltungen:
- DE-A1-102009 011 552
- DE-A1-102009 028 051
- US-A1- 2005 108 571
- Yingbo Hu,Ralph Moore: "Ways to Use USB inEmbedded Systems", , 31. Dezember 2008 (2008-12-31), Seiten 22-26, XP002695588, Gefunden im Internet: URL:http://www.iqmagazineonline.com/IQ/IQ2 5/pdfs/IQ25_pgs22-26.pdf [gefunden am 2013-04-16]

## Beschreibung

Ferner bezieht sich die Erfindung auf eine Anordnung zur Durchführung des Verfahrens und auf ein Computerprogrammprodukt.

In der Prozess- ebenso wie in der Automatisierungstechnik werden vielfach Feldgeräte eingesetzt, die zur Erfassung und/oder Beeinflussung von Prozessgrößen dienen. Zur Erfassung von Prozessgrößen dienen Messgeräte, wie beispielsweise Füllstandsmessgeräte, Durchflussmessgeräte, Druck- und Temperaturmessgeräte, pH-Messgeräte, Leitfähigkeitsmessgeräte, usw., welche die entsprechenden Prozessgrößen Füllstand, Durchfluss, Druck, Temperatur, pH-Wert bzw. Leitfähigkeit erfassen. Zur Beeinflussung der Prozessgrößen werden Aktoren verwendet, wie Ventile oder Pumpen, über die z.B. der Durchfluss einer Flüssigkeit in einer Rohrleitung oder der Füllstand eines Mediums in einem Behälter geändert wird. Als Feldgeräte werden im Prinzip alle Geräte bezeichnet, die prozessnah eingesetzt werden und die prozessrelevante Informationen liefern oder verarbeiten. Eine Vielzahl solcher Feldgeräte wird von der Firmengruppe Endress+Hauser angeboten und vertrieben. Unter dem in Verbindung mit der Erfindung verwendeten Begriff Feldgerät sind somit alle Typen von Messgeräten und Aktoren zu subsumieren. Weiterhin umfasst der Begriff Feldgerät aber auch z.B. ein Gateway, einen Funkadapter oder andere in ein Bussystem integrierte/integrierbare Busteilnehmer.

In modernen Industrieanlagen sind Feldgeräte in der Regel über Bussysteme, wie beispielsweise über Profibus® PA, Foundation Fieldbus® oder HART® mit zumindest einer übergeordneten Steuereinheit verbunden. Normalerweise handelt es sich bei der übergeordneten Steuereinheit - wie bereits erwähnt - um ein Leitsystem oder um eine bereits zuvor näher spezifizierte Steuereinheit. Die übergeordnete Steuereinheit dient zur Prozesssteuerung, zur Prozessvisualisierung, zur Prozessüberwachung sowie zur Inbetriebnahme und Bedienung der Feldgeräte. Programme, die auf übergeordneten Einheiten eigenständig ablaufen, sind beispielsweise das Bedientool FieldCare der Firmengruppe Endress+Hauser, das Bedientool Pactware, das Bedientool AMS von Fisher-Rosemount oder das Bedientool PDM von Siemens. Bedientools, die in Leitsystem-Anwendungen integriert sind, sind das PCS7 von Siemens, das Symphony von ABB und das Delta V von Emerson.

Unter dem Bedienen eines solchen Feldgerätes wird insbesondere das Konfigurieren und Parametrieren des Feldgerätes, aber auch die Diagnose zwecks frühzeitiger Erkennung von Fehlern an einem der Feldgeräte oder im Prozess verstanden.

Aus dem Stand der Technik ist die Veröffentlichung von Yingbo Hu, Ralph Moore, "Ways to Use USB in Embedded Systems" bekannt, die unter Nutzung der Remote Network Driver Interface Spezifikation (RNDIS) die Ethernet Emulation einer USB-Schnittstelle beschreibt. Ferner sind aus dem Stand der Technik beispielsweise auch aus den Offenlegungsschriften DE 102009011552 A1, DE 102004002330 A1, DE 102009028051 A1 Vorrichtungen und Verfahren zur Datenübertragung zwischen einem Feldgerät und einem Bediengerät bekannt geworden. In der DE 102009011552 A1 wird zu diesem Zweck bspw. eine Verbindungseinrichtung vorgesehen, die eine Zugriffsapplikation enthält, wobei die Zugriffsapplikation auf das Bediengerät übertragbar und dort ausführbar ist, um eine Datenübertragung zwischen dem Feldgerät und dem Bediengerät zu ermöglichen. Aus der DE 102004002330 A1 ist es bekannt geworden, einen Datensammler an ein Feldgerät anzuschließen, welcher Datensammler Daten drahtlos an eine Datenverarbeitungseinrichtung überträgt. Der Datensammler ist dabei bspw. über ein Netzwerk vom Ethernet-Typ mit einer entsprechenden Funkschnittstelle verbunden. Ferner ist es aus der DE 102009028051 A1 bekannt geworden, die Bedienung eines Feldgerätes auf einem entfernten Terminal zu emulieren, und die derart erzeugten Inhalte über einen Webbrowser anzuzeigen.

Dabei ist es jedoch von Nachteil, dass stets eine spezifische Hardware in Form einer spezifischen Kommunikationsschnittstelle insbesondere eine Ethernet-Schnittstelle wie im Beispiel der DE 102009028051 A1 vorhanden sein muss, damit die entsprechenden Inhalte bspw. auf einem Webbrowser dargestellt werden können.

Es ist somit Aufgabe der vorliegenden Erfindung, eine im Wesentlichen von der vorliegenden Hardware der Kommunikationsschnittstelle unabhängige Bedienung eines Feldgerätes zu ermöglichen.

Die Aufgabe durch die Merkmale des Anspruchs 1 gelöst. Über eine Verbindung zwischen dem Feldgerät und einem Bediengerät zum Bedienen des Feldgerätes werden Daten ausgetauscht, wobei die Verbindung über eine Kommunikationsschnittstelle an dem Feldgerät und eine Kommunikationsschnittstelle an dem Bediengerät hergestellt wird, wobei es sich bei der Kommunikationsschnittstelle des Bediengerätes um eine hardwaremäßige Kommunikationsschnittstelle handelt, die softwaremäßig als Ethernet-Schnittstelle emuliert wird. Das Feldgerät und das Bediengerät werden über eine Verbindungseinrichtung, vorzugsweise ein Kabel, verbunden, wobei die Verbindungseinrichtung an die Kommunikationsschnittstelle des Feldgerätes, bspw. an einen an dem Feldgerät vorhandenen Kommunikationsanschluss, und an die Kommunikationsschnittstelle des Bediengerätes, bspw. an einen an dem Bediengerät vorhandenen Kommunikationsanschluss, angeschlossen wird. Die Verbindungseinrichtung umfasst eine Datenverarbeitungseinrichtung, die über eine erste Teilverbindung der Verbindungseinrichtung mit der Kommunikationsschnittstelle des Feldgerätes und über eine zweite Teilverbindung mit der Kommunikationsschnittstelle des Bediengerätes verbunden wird. Die Datenverarbeitungseinrichtung umfasst einen Webserver, und die Daten werden vermittels des Webservers an das Bediengerät übertragen. Die Verbindungseinrichtung, insbesondere die Datenverarbeitungseinrichtung, weist eine austauschbare Speichereinheit auf, und in der Speichereinheit sind bevorzugt Feldgerätetreiber bzw. Feldgerätebeschreibungen zur Bedienung des Feldgerätes abgespeichert, die zur Bedienung des Feldgerätes verwendet werden, vorzugsweise indem die auf der Speichereinheit hinterlegten Feldgerätetreiber bzw. Feldgerätebeschreibungen von der Datenverarbeitungseinheit geladen und zur Kommunikation mit dem Feldgerät genutzt werden.

In einer Ausführungsform des Verfahrens wird zur Kommunikation über die Kommunikationsschnittstelle des Bediengerätes seitens des Bediengerätes das Internet Protocol, kurz: IP, verwendet, und der Kommunikationsschnittstelle des Bediengerätes wird eine IP-Adresse zugewiesen, unter der die Kommunikationsschnittstelle des Bediengerätes, insbesondere seitens des Bediengeräts, adressiert.

In einer weiteren Ausführungsform des Verfahrens kann die Verbindungseinrichtung an unterschiedliche Feldgeräte angeschlossen werden. Zu diesem Zweck kann die Verbindungseinrichtung entsprechende standardisierte Abschlüsse aufweisen, die zum Verbinden mit der entsprechenden Kommunikationsschnittstelle des Feldgerätes bzw. des Bediengerätes dient.

In einer weiteren Ausführungsform des Verfahrens erfolgt die Bedienung, insbesondere die Parametrierung, des Feldgerätes über einen Webbrowser, vorzugsweise in dem Bediengerät.

In einer weiteren Ausführungsform des Verfahrens handelt es sich bei der Kommunikationsschnittstelle des Feldgerätes um eine Schnittstelle zur Kommunikation über den Feldbus oder eine Serviceschnittstelle des Feldgerätes.

In einer weiteren Ausführungsform des Verfahrens werden die Daten von dem Feldgerät vermittels eines feldgerätespezifischen Protokolls über die erste Teilverbindung an die Datenverarbeitungseinrichtung übertragen.

In einer weiteren Ausführungsform des Verfahrens handelt es sich bei der hardwaremäßigen Kommunikationsschnittstelle des Bediengerätes um eine USB-Schnittstelle.

In einer weiteren Ausführungsform des Verfahrens werden in USB-Datenpakete gekapselte Ethernet-Pakete oder Ethernet-Frames über die zweite Teilverbindung zwischen der Datenverarbeitungseinheit, insbesondere dem Webserver, und dem Bediengerät übertragen.

In einer weiteren Ausführungsform des Verfahrens erfolgt die Energieversorgung des Feldgerätes und/oder der Datenverarbeitungseinrichtung über die Kommunikationsschnittstelle des Bediengerätes,

In einer weiteren Ausführungsform des Verfahrens wird als Schnittstelle der Verbindungseinrichtung, insbesondere der Datenverarbeitungseinrichtung, ein sog. SD-Karten-Slot verwendet wird.

In einer weiteren Ausführungsform des Verfahrens wird als Bediengerät eine weitere digitale Datenverarbeitungseinrichtung wie bspw. PC oder ein Smartphone verwendet.

Weiterhin bezieht sich die Erfindung auf eine Anordnung, umfassend ein Feldgerät, sowie ein Bediengerät und bevorzugt eine Verbindungseinrichtung, zur Durchführung des erfindungsgemäßen Verfahrens und auf ein Computerprogramm mit Programmcodemitteln zur Durchführung des erfindungsgemäßen Verfahrens nach einer der genannten Ausführungsformen.

Die Erfindung wird anhand der nachfolgenden Zeichnungen näher erläutert. Es zeigt:

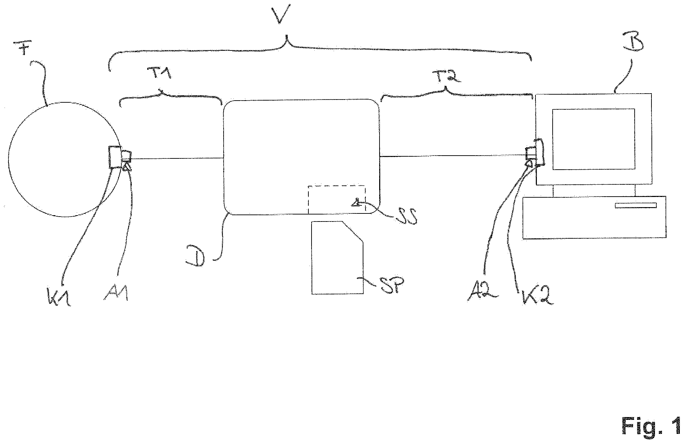

Fig. 1: eine schematische Darstellung einer Ausführungsform gemäß der vorgeschlagenen Erfindung umfassend ein Feldgerät, eine Verbindungseinrichtung und ein Bediengerät.

Bei dem Feldgerät F kann es sich um einen Sensor, einen Aktor und/oder eine Anzeigeeinheit handeln. Allgemein kann es sich bei dem Feldgerät F um ein Gerät handeln, das vor Ort in einer Anlage der Prozessautomatisierungstechnik eingesetzt wird. Die Verbindungseinrichtung V ist gemäß dem in Figur 1 gezeigten Ausführungsbeispiel über den CDI-Anschluss K1 des Feldgerätes F mit dem Feldgerät F verbunden. Bei dem sog. CDI-Anschluss K1 handelt es sich um einen Serviceanschluss des Feldgerätes F. Alternativ kann die Verbindungseinrichtung V auch an einen Feldbusanschluss, nicht gezeigt, des Feldgerätes F angeschlossen werden.

Die Verbindungseinrichtung V ist ferner mit dem Bediengerät B, in diesem Fall einem PC, verbunden. Die Verbindungseinrichtung V kann somit über wenigstens einen ersten und einen zweiten Anschluss A1, A2, die bspw. an den Enden eines Kabels angebracht sind, verfügen. Über diese Anschlüsse A1, A2 ist die Verbindungseinrichtung V mit dem Feldgerät F bzw. dem Bediengerät B verbunden. Dabei wird die Verbindung vorzugsweise über entsprechende Kommunikationsschnittstellen K1, K2 an dem Feldgerät F bzw. dem Bediengerät B hergestellt. Über diese Verbindung können dann Daten von dem Feldgerät F an das Bediengerät B bzw. von dem Bediengerät B an das Feldgerät F übertragen werden.

Die Verbindungseinrichtung V gemäß Figur 1 verfügt zusätzlich noch über eine Datenverarbeitungseinrichtung D, die einen Mikrocontroller, nicht gezeigt, umfasst. Vermittels der Datenverarbeitungseinrichtung D kann eine Protokollumsetzung zwischen einem ersten Protokoll, welches zur Kommunikation über den CDI-Anschluss K1 des Feldgerätes F genutzt wird, und einem zweiten Protokoll, welches zur Kommunikation über die Kommunikationsschnittstelle K2 des Bediengerätes B genutzt wird. Eine Datenübertragung zwischen dem zwischen dem Feldgerät F und der Datenverarbeitungsvorrichtung D erfolgt also gem. dem ersten Protokoll über eine erste Teilverbindung T1 der Verbindungseinrichtung V und eine Datenübertragung zwischen der Datenverarbeitungseinrichtung D und dem Bediengerät B gem. dem zweiten Protokoll über eine zweite Teilverbindung T2 der Verbindungseinrichtung V.

Zur Datenübertragung zwischen der Datenübertragungseinheit D und dem Bediengerät B, also über die zweite Teilverbindung T2, wird dabei gem. der Ausführungsform in Figur 1 ein Webserver, nicht gezeigt, genutzt, der auf der Datenverarbeitungseinheit D gehostet wird. Über einen entsprechenden Webbrowser, nicht gezeigt, auf dem Bediengerät B können die Daten angezeigt und/oder abgerufen werden. Die Übertragung der Daten erfolgt dabei über eine hardwaremäßige Kommunikationsschnittstelle K2 des Bediengerätes. Bei dieser hardwaremäßigen Kommunikationsschnittstelle K2 handelt es sich bevorzugt um eine Kommunikationsschnittstelle gemäß dem USB-Standard. Gem. dem USB-Standard können sowohl Daten als auch eine elektrische Speisespannung über eine entsprechende Schnittstelle, d.h. eine dem USB-Standard genügende Schnittstelle, übertragen werden. Um eine Kommunikation über eine derartige Schnittstelle besonders einfach zu ermöglich, insbesondere derart, dass Daten von einem Webbrowser abgerufen werden können, wird die Kommunikationsschnittstelle K2 als Ethernet-Schnittstelle emuliert. Der Kommunikationsschnittstelle K2 des Bediengerätes B kann daher bspw. eine IP-Adresse zugeordnet werden, unter der die Kommunikationsschnittstelle K2 adressierbar ist. Über den Webbrowser können dann Daten von dem Webserver der Datenverarbeitungseinheit D der Verbindungseinrichtung V vermittels der IP-Adresse abgerufen werden, obwohl hardwaremäßig keine Ethernet-Schnittstelle vorliegt. Ferner ist von Vorteil, dass das Feldgerät F keinen integrierten Webserver aufweisen muss, da der Webserver in die Verbindungseinrichtung V integriert ist. Über die Bedienoberfläche des Webbrowsers kann bspw. eine Parameterierung des Feldgerätes F erfolgen.

Daten die zwischen dem Webserver und dem Webbrowser ausgetauscht werden, können bspw. in Form von Ethernet-Paketen oder Ethernet-Frames vorliegen und zur Übertragung über die hardwaremäßige Kommunikationsschnittstelle K2 in die Telegramme oder Pakete des zur Übertragung von Daten über die Kommunikationsschnittstelle K2 verwendeten Protokolls gekapselt bzw. eingebettet werden. Dies entspricht dem Vorgang des Tunnelns von Ethernet-Paketen bzw. -Frames.

Die Datenverarbeitungseinheit D der Verbindungsvorrichtung V kann zudem über eine insbesondere austauschbare Speichereinheit SP verfügen. Diese Speichereinheit SP kann mit der Datenverarbeitungseinrichtung D über eine Schnittstelle SS der Datenverarbeitungseinrichtung D verbunden sein. Bspw. kann es sich wie in Figur 1 gezeigt, bei der Speichereinheit SP um eine SD-Karte und bei der Schnittstelle SS um einen entsprechenden SD-Karten-Slot handeln. Damit können entsprechende Softwareupdates, die unter anderem der verbesserten Bedienung des Feldgerätes F dienen, durchgeführt werden, indem ein in der Speichereinheit SP hinterlegtes Update, wie bspw. eine Feldgerätebeschreibung oder ein Feldgerätetreiber aus der Speichereinheit SP geladen wird und von der Datenverarbeitungseinheit D ausgeführt wird.

### Bezugszeichenliste

- F: Feldgerät
- B: Bediengerät
- V: Verbindungseinrichtung
- D: Datenverarbeitungseinheit
- T1: erste Teilverbindung
- T2: zweite Teilverbindung
- A1: feldgeräteseitiger Anschluss der Verbindungseinrichtung
- A2: bediengeräteseitiger Anschluss der Verbindungseinrichtung
- K1: Kommunikationsschnittstelle des Feldgerätes
- K2: Kommunikationsschnittstelle des Bediengerätes
- SS: Schnittstelle der Datenverarbeitungseinheit für die Speichereinheit
- SP: Speichereinheit

## Patentansprüche

1. Verfahren zum Bedienen eines Feldgerätes (F) der Prozessautomatisierungstechnik,
wobei über eine Verbindung zwischen dem Feldgerät (F) und einem Bediengerät (B) zum Bedienen des Feldgerätes (F) Daten ausgetauscht werden,
wobei die Verbindung über eine Kommunikationsschnittstelle (K1) an dem Feldgerät und eine Kommunikationsschnittstelle (K2) an dem Bediengerät hergestellt wird,
wobei das Feldgerät (F) und das Bediengerät (B) über eine Verbindungseinrichtung (V) verbunden werden,
welche Verbindungseinrichtung (V) an der Kommunikationsschnittstelle (K1) des Feldgerätes (F) und die Kommunikationsschnittstelle (K2) des Bediengerätes (B) angeschlossen wird, wobei es sich bei der Kommunikationsschnittstelle (K2) des Bediengerätes (B) um eine hardwaremäßige Kommunikationsschnittstelle handelt, die softwaremäßig als Ethernet-Schnittstelle emuliert wird, wobei die Verbindungseinrichtung (V) eine Datenverarbeitungseinrichtung (D) umfasst, die über eine erste Teilverbindung (T1) der Verbindungseinrichtung (V) mit der Kommunikationsschnittstelle (K1) des Feldgerätes und über eine zweite Teilverbindung (T2) mit der Kommunikationsschnittstelle (K2) des Bediengerätes verbunden wird, wobei die Datenverarbeitungseinrichtung (D) einen Webserver umfasst, und wobei Daten vermittels des Webservers an das Bediengerät (B) übertragen werden, wobei die Datenverarbeitungseinrichtung (D) eine austauschbare Speichereinheit (SP) aufweist, und wobei in der Speichereinheit (SP) bevorzugt Feldgerätetreiber bzw. Feldgerätebeschreibungen zur Bedienung des Feldgerätes (F) abgespeichert sind, die zur Bedienung des Feldgerätes (F) verwendet werden, indem die auf der Speichereinheit (SP) hinterlegten Feldgerätetreiber bzw. Feldgerätebeschreibungen von der Datenverarbeitungseinheit (D) geladen und zur Kommunikation mit dem Feldgerät (F) über die zweite Teilverbindun g (T2) genutzt werden.

2. Verfahren nach dem vorherigen Anspruch, **dadurch gekennzeichnet, dass** zur Kommunikation über die Kommunikationsschnittstelle (K2) des Bediengerätes (B) seitens des Bediengerätes das Internet Protocol, kurz: IP, verwendet wird, und
wobei der Kommunikationsschnittstelle (K2) des Bediengerätes eine IP-Adresse zugewiesen wird, unter der die Kommunikationsschnittstelle (K2) des Bediengerätes (B), insbesondere seitens des Bediengeräts (B), adressiert wird.

3. Verfahren nach einem der vorherigen Ansprüche, **dadurch gekennzeichnet,**
**dass** die Verbindungseinrichtung (V) an unterschiedliche Feldgeräte (F) angeschlossen werden kann.

4. Verfahren nach einem der vorherigen Ansprüche, **dadurch gekennzeichnet,**
**dass** die Bedienung, insbesondere die Parametrierung, des Feldgerätes (F) über einen Webbrowser, vorzugsweise in dem Bediengerät (B), erfolgt.

5. Verfahren nach einem der vorherigen Ansprüche, **dadurch gekennzeichnet,**
**dass** es sich bei der Kommunikationsschnittstelle (K1) des Feldgerätes um eine Schnittstelle zur Kommunikation über den Feldbus oder eine Serviceschnittstelle des Feldgerätes (F) handelt.

6. Verfahren nach einem der vorhergehenden Ansprüche, **dadurch gekennzeichnet,**
**dass** die Daten von dem Feldgerät (F) vermittels eines feldgerätespezifischen Protokolls über die erste Teilverbindung (T1) an die Datenverarbeitungseinrichtung (D) übertragen werden.

7. Verfahren nach dem vorherigen Anspruch, **dadurch gekennzeichnet,**
**dass** es sich bei der hardwaremäßigen Kommunikationsschnittstelle (K2) des Bediengerätes (B) um eine USB-Schnittstelle handelt.

8. Verfahren nach dem vorherigen Anspruch, **dadurch gekennzeichnet,**
**dass** in USB-Datenpakete gekapselte Ethernet-Pakete oder Ethernet-Frames über die zweite Teilverbindung (T2) zwischen der Datenverarbeitungseinheit (D), insbesondere dem Webserver, und dem Bediengerät (B) übertragen werden.

9. Verfahren nach einem der vorherigen Ansprüche, **dadurch gekennzeichnet,**
**dass** die Energieversorgung des Feldgerätes (F) und/oder der Datenverarbeitungseinrichtung (D) über die Kommunikationsschnittstelle (K2) des Bediengerätes erfolgt,

10. Verfahren nach dem vorherigen Anspruch, **dadurch gekennzeichnet,**
**dass** als Schnittstelle (SS) der Verbindungseinrichtung (V), insbesondere der Datenverarbeitungseinrichtung (D), ein sog. SD-Karten-Slot verwendet wird.

11. Anordnung umfassend ein Feldgerät (F), sowie ein Bediengerät (B) und eine Verbindungseinrichtung (V) zur Durchführung des Verfahrens nach einem der Ansprüche 1-10.

12. Computerprogramm mit Programmcodemitteln, die Instruktionen beinhalten, welche, wenn sie von Datenverarbeitungseinrichtungen auf einem Feldgerät (F), einem Bediengerät (B) und einer Verbindungseinrichtung (V) ausgeführt werden, die Datenverarbeitungseinrichtungen instruieren, alle Schritte zur Ausführung des Verfahrens nach einem der Ansprüche 1-10 durchzuführen.

## Claims

1. Procedure for operating a field device (F) used in process automation engineering,
wherein data are exchanged via a connection between the field device (F) and an operating unit (B) for the purpose of operating the field device (F),
wherein the connection is established via a communication interface (K1) at the field device and a communication interface (K2) at the operating unit,
wherein the field device (F) and the operating unit (B) are connected via a connection unit (V),
wherein said connection unit (V) is connected to the communication interface (K1) of the field device (F) and the communication interface (K2) of the operating device (B),
wherein the communication interface (K2) of the operating unit (B) is a hardware communication interface, which is emulated by software as an Ethernet interface, wherein the connection unit (V) comprises a data processing unit (D), which is connected to the communication interface (K1) of the field device via a first sub-connection (T1) of the connection unit (V) and to the communication interface (K2) of the operating unit (B) via a second sub-connection,
wherein the data processing unit (D) comprises a web server, and wherein data are transmitted to the operating unit (B) by means of the web server,
wherein the data processing unit (D) has a replaceable memory unit (SP), and
wherein field device drivers and/or field device descriptions for operating the field device (F) are preferably saved in the memory unit (SP) and used to operate the field device (F) in that the field device drivers or field device descriptions which are saved on the memory unit (SP) are uploaded by the data processing unit (D) and used for communication with the field device (F) via the second sub-connection (T2).

2. Procedure as claimed in the previous claim,
**characterized in that**
the Internet Protocol (IP) is used by the operating unit (B) for communication via the communication interface (K2) of the operating unit (B), and
wherein the communication interface (K2) of the operating unit (B) is assigned an IP address at which the communication interface (K2) of the operating unit (B) is addressed, particularly on the part of the operating unit (B).

3. Procedure as claimed in one of the previous claims,
**characterized in that**
the connection unit (V) can be connected to different field devices (F).

4. Procedure as claimed in one of the previous claims,
**characterized in that**
the operation, particularly the configuration, of the field device (F), takes place via a web browser, preferably in the operating unit (B).

5. Procedure as claimed in one of the previous claims,
**characterized in that**
the communication interface (K1) of the field device is an interface for communicating via the field bus or a service interface of the field device (F).

6. Procedure as claimed in one of the previous claims,
**characterized in that**
the data are transmitted from the field device (F) to the data processing unit (D) via the first subconnection (T1) by means of a field device-specific protocol.

7. Procedure as claimed in the previous claim,
**characterized in that**
the hardware communication interface (K2) of the operating unit (B) is a USB interface.

8. Procedure as claimed in the previous claim,
**characterized in that**
Ethernet packets or Ethernet frames encapsulated in USB data packets are transmitted between the data processing unit (D), particularly the web server, and the operating unit (B) via the second subconnection (T2).

9. Procedure as claimed in one of the previous claims,
**characterized in that**
power is supplied to the field device (F) and/or the data processing unit (D) via the communication interface (K2) of the operating unit.

10. Procedure as claimed in the previous claim,
**characterized in that**
an SD card slot is used as the interface (SS) of the connection unit (V), particularly of the data processing unit (D).

11. Arrangement comprising a field device (F), and an operating unit (B) and a connection unit (V) for implementing the procedure as claimed in one of the Claims 1 to 10.

12. Computer program with program code resources that contain instructions which, if run by data processing units on a field device (F), an operating device (B) and a connection unit (V), instruct the data processing units to perform all the steps to execute the procedure as claimed in one of the Claims 1 to 10.

## Revendications

1. Procédé destiné à l'utilisation d'un appareil de terrain (F) de la technique d'automatisation des process,
pour lequel des données sont échangées via une liaison entre l'appareil de terrain (F) et un appareil de commande (B) en vue de l'utilisation de l'appareil de terrain (F),
pour lequel la liaison est établie via une interface de communication (K1) sur l'appareil de terrain et une interface de communication (K2) sur l'appareil de commande,
pour lequel l'appareil de terrain (F) et l'appareil de commande (B) sont reliés par l'intermédiaire d'une unité de liaison (V),
laquelle unité de liaison (V) est raccordée à l'interface de communication (K1) de l'appareil de terrain (F) et à l'interface de communication (K2) de l'appareil de commande (B),
procédé pour lequel il s'agit, concernant l'interface de communication (K2) de l'appareil de commande (B), d'une l'interface de communication matérielle, qui est émulée par logiciel en tant qu'interface Ethernet,
procédé pour lequel l'unité de liaison (V) comprend une unité de traitement de données (D), laquelle est reliée via une première liaison partielle (T1) de l'unité de liaison (V) avec l'interface de communication (K1) de l'appareil de terrain et via une deuxième liaison partielle (T2) avec l'interface de communication (K2) de l'appareil de commande (B),
l'unité de traitement de données (D) comprenant un serveur Web, et les données étant transmises au moyen du serveur Web à l'appareil de commande (B), l'unité de traitement de données (D) comportant une unité mémoire (SP) interchangeable, et
des pilotes d'appareil de terrain ou des descriptions d'appareil de terrain étant de préférence enregistrés dans l'unité de mémoire (SP) en vue de la commande de l'appareil de terrain (F), lesquels pilotes et descriptions sont utilisés pour la commande de l'appareil de terrain en ce que les pilotes d'appareil de terrain et/ou les descriptions d'appareil de terrain enregistrés dans l'unité de mémoire (SP) sont chargés par l'unité de traitement de données (SP) et sont utilisés pour la communication avec l'appareil de terrain (F) via la deuxième liaison partielle (T2).

2. Procédé selon la revendication précédente,
**caractérisé**
**en ce qu'**est utilisé côté appareil de commande, pour la communication via l'interface de communication (K2) de l'appareil de commande (B), le protocole Internet (IP en abrégé), et
**en ce qu'**est affectée, à l'interface de communication (K2) de l'appareil de commande, une adresse IP sous laquelle l'interface de communication (K2) de l'appareil de commande (B), notamment du côté de l'appareil de commande (B), est adressée.

3. Procédé selon l'une des revendications précédentes,
**caractérisé**
**en ce que** l'unité de liaison (V) peut être raccordée à différents appareils de terrain (F)

4. Procédé selon l'une des revendications précédentes,
**caractérisé**
**en ce que** la configuration, notamment le paramétrage de l'appareil de terrain (F), est réalisé par le biais d'un navigateur Web, de préférence dans l'appareil de commande (B).

5. Procédé selon l'une des revendications précédentes,
**caractérisé**
**en ce que**, concernant l'interface de communication (K1) de l'appareil de terrain, il s'agit d'une interface destinée à la communication via le bus de terrain ou une interface de service de l'appareil de terrain (F).

6. Procédé selon l'une des revendications précédentes,
**caractérisé**
**en ce que** les données provenant de l'appareil de terrain (F) sont transmises au moyen d'un protocole spécifique à l'appareil de terrain via la première liaison partielle (T1) à l'unité de traitement de données (D).

7. Procédé selon la revendication précédente,
**caractérisé**
**en ce que**, concernant l'interface de communication matérielle (K2) de l'appareil de commande (B), il s'agit d'une interface USB.

8. Procédé selon la revendication précédente,
**caractérisé**
**en ce que** des paquets Ethernet ou des trames Ethernet encapsulés dans des paquets de données USB sont transmis via la deuxième liaison partielle (T2) entre l'unité de traitement de données (D), notamment le serveur Web, et l'appareil de commande (B).

9. Procédé selon l'une des revendications précédentes,
**caractérisé**
**en ce que** l'alimentation en énergie de l'appareil de terrain (F) et/ou de l'unité de traitement de données (D) s'effectue par l'intermédiaire de l'interface de communication (K2) de l'appareil de commande.

10. Procédé selon la revendication précédente,
**caractérisé**
**en ce qu'**est utilisée, comme interface (SS) de l'unité de liaison (V), notamment de l'unité de traitement de données (D), un logement de carte SD.

11. Arrangement comprenant un appareil de terrain (F), ainsi qu'un appareil de commande (B) et une unité de liaison (V), destinés à la réalisation du procédé selon l'une des revendications 1 à 10.

12. Programme d'ordinateur avec des moyens de code de programme, lesquels contiennent des instructions qui, lorsqu'elles sont exécutées par les équipements de traitement de données sur un appareil de terrain (F), un appareil de commande (B) et une unité de liaison (V), donnent des instructions aux équipements de traitement de données en vue de réaliser toutes les étapes d'exécution du procédé selon l'une des revendications 1 à 10.
